# EUROPEAN PATENT APPLICATION

(11) **EP 3 496 027 A1**
(43) Date of publication of application: **12.06.2019**
(21) Application number: 17205713.5
(22) Date of filing: 06.12.2017
(51) Int. Cl.: G06Q 40/04, G06Q 20/02, G06Q 20/06

(54) **METHOD FOR SETTLING A BLOCKCHAIN ASSET**

(71) Applicant: BlockSettle AB, 216 19 Malmö (SE)
(72) Inventor: Millar, Scott, 216 19 MALMÖ (SE); Janson, Albert, 239 40 FALSTERBO (SE); Fathpour Pakzad, Farhod, 95540 MERY SUR OISE (FR); Chernikov, Sergey, MOSCOW (RU); Tanchuck, Anton, 46 KHARKIV (UA)
(74) Representative: Noréns Patentbyrå AB

(57) **Abstract**

Method for settling an asset transaction in which a first asset is exchanged for a second asset,
which first asset is registered as an association with a specific first blockchain asset (A) on a blockchain-based ledger (L),
which second asset is either a second blockchain asset (A) on the ledger (L) in question or an asset registered as an association with a specific second blockchain asset (A) on the said ledger (L).

The method comprises the following steps:
a) a selling first party (U) providing and signing a first blockchain transaction part concerning the first blockchain asset (A) in question, and a buying second party (U) providing and signing a second blockchain transaction part concerning the second blockchain asset (A) in question;
b) a central server (100) electronically receiving the signed first and second blockchain transaction parts;
c) the central server (100) combining the first and second blockchain transaction parts in a single combined blockchain transaction; and
d) the central server (100) publishing the combined blockchain transaction on the blockchain ledger (L).

The invention also relates to a computer server interacting with a client computer, and to two interacting computer software products.

## Description

The present invention relates to methods and systems relating to blockchain-based transactions, and to methods and systems relating to the trade and settlement of such transactions. In particular, the present invention concerns the trade and settlement of transactions involving assets being associated with a particular blockchain asset, such as so-called coloured blockchain assets.

Blockchain-based assets are becoming increasingly important as carriers of value in different aspects. One well-known example is the bitcoin currency, but there are also many other assets in circulation. Common for such blockchain-based assets is that transactions of the assets in question are recorded on blockchain-based ledgers.

In a blockchain-based ledger, the entire historical record of transactions, or references to the historical transactions, is typically stored in a way in which each transaction is linked, directly or indirectly, to previous transactions using one-way functions. As a result of this structure, a historical transaction recorded on the ledger is very difficult to modify in retrospect, since this requires the modifying party to change each intermediate state of the ledger between the changed transaction and the current state of the ledger in a way which does not rise suspicion from other peers to the blockchain-based ledger. Since the ledger may normally be distributed across many different such peers, such changing is typically in practise impossible.

The "block" in a blockchain-based ledger refers to combinations of several transactions, that are added to the blockchain as individually sealed packages. This provides simplicity and increased security across a network of peers that do not necessarily trust one another. The process of creating sealed and verified blocks is sometimes called "mining" of the blockchain. Once a block is created and sealed, using a one-way function, all transactions contained in the block in question are verifiable by all peers having access to the ledger.

Blockchain-based ledgers are as such well-known in the art, and will not be discussed in detail herein. As an example, transactions in the bitcoin currency are recorded on a blockchain-based ledger, the bitcoin blockchain.

In particular, many blockchain-based assets may be associated with other assets ("external assets") using a mechanism denoted "colouring". Such external assets may be real-world assets such as real estate, products or services, in particular quantifiable such assets. However, such external assets may also be purely virtual. What is important is that such external assets may represent quantified values that in themselves have no connection to the blockchain or its assets, apart from said association. This way, such an external asset can be transacted by piggy-backing on a blockchain asset being transacted on a blockchain. For instance, this is as such well-known for so-called coloured bitcoins. The association to the external asset typically forms part of the blockchain by being directly included or referenced in each blockchain asset transaction and hence forming a necessary requirement for the data on the blockchain for future verification.

When trading in external assets, using corresponding blockchain asset transactions, a problem is that a selling party should be guaranteed delivery of the payment, and vice versa for a buying party regarding the delivery of the coloured blockchain asset carrying the bought external assets. Since the parties in general need not trust one another, and since the finalization of a blockchain transaction typically involves a certain waiting time such as blockchain mining to sufficient depth, there will be counterparty risk. Each counterparty will, apart from the general risk of trusting a stranger, neither control the timing of the delivery of the payment or the asset paid for, nor that there will actually be a delivery at all.

To mitigate such risk, centralized custodian mechanisms have been proposed. However, this requires the parties to trust such a custodian.

In particular, these problems are present for trades involving the exchange of an external asset for a blockchain asset, such as trades involving an external asset being represented by a blockchain asset and a blockchain asset. For instance, a coloured bitcoin of certain external asset value may be traded for another coloured bitcoin of certain external asset value, or for a certain bitcoin asset amount as such.

Hence, there is a need for a way to allow trades between external assets of the above type and other blockchain-based assets, that does not require any party to trust neither the other party nor a central custodian, while still providing full security. Such a method should furthermore preferably be useful in a multi-party trading solution, allowing price discovery mechanisms and efficient clearing.

The prior art includes US 20160330034 A1 and WO 2016141361 A1, describing relevant background art relating to blockchain-based assets and blockchain side-chaining.

Moreover, EP 17167819.6 and EP 17167822.0, that have yet not been published at the filing date of the present application, describe blockchain-based asset transaction related methods for settling a transaction and for creating a secure party identity.

The present invention solves these problems.

Hence, the invention relates to a method for settling an asset transaction in which a first asset is exchanged for a second asset, which first asset is registered as an association with a specific first blockchain asset on a blockchain-based ledger, which ledger is arranged to keep track of blockchain transactions concerning the blockchain asset in question from senders to specified blockchain asset addresses, which blockchain transactions are signed using a respective private cryptographic key belonging to the sender in question, which association is arranged so that the association remains as an association between the first asset and a blockchain asset, in a way which is verifiable on the said ledger, after a transaction involving the blockchain asset in question, which second asset is either a second blockchain asset on the ledger in question or an asset registered as an association with a specific second blockchain asset on the said ledger, which method is characterised in that the method comprises the steps a) a selling first party providing and signing a first blockchain transaction part comprising a first input blockchain transaction leg concerning the first blockchain asset in question and a buying second party providing and signing a second blockchain transaction part comprising a second input blockchain transaction leg concerning the second blockchain asset in question; b) a central server electronically receiving the signed first and second blockchain transaction parts; c) the central server combining the first and second blockchain transaction parts in a single combined blockchain transaction comprising the first input blockchain transaction leg, the second input blockchain transaction leg, a first output blockchain transaction leg concerning the first blockchain asset and a second output blockchain transaction leg concerning the second blockchain asset; and d) the central server publishing the combined blockchain transaction on the blockchain ledger.

In particular in such a method, the said one or two associations may be blockchain colouring associations.

Further particularly, the said combined blockchain transaction may be an all-or none coinjoin blockchain transaction.

Further particularly, the method may further comprise a blockchain asset verification step, in which the central server verifies the first and second blockchain assets in terms of at least blockchain integrity, ownership and amount, and in that the combined blockchain transaction is not published unless the verification in question is positive.

The method may further comprise a combined blockchain transaction verification step, performed by the central server after step d), comprising waiting until the blockchain that the combined blockchain transaction forms part of has been mined to a predetermined depth, and in that the asset transaction is thereafter finalized.

The method may comprise a bidding, quotation or request for quote step, preceding step c), during or as a result of which the first party is provided with information regarding the second blockchain asset, making it possible for the first party to verify the blockchain integrity of the second blockchain asset, and the second party may be provided with information regarding the first blockchain asset, making it possible for the second party to verify the blockchain integrity of the first blockchain asset.

Step b) may be performed during a settlement execution time period of predetermined length, which settlement execution time period is initiated by the central server once the first party and the second party, as well as a first asset transaction amount and a second asset transaction amount, have been identified by the central server.

The signing performed by the first party in step a) may be performed independently from the signing performed by the second party in step a), and the central server may in step b) receives the singed blockchain transaction parts from the respective first and second party independently of the respective other party.

Furthermore, the invention relates to a computer server for settling an asset transaction in which a first asset is exchanged for a second asset, which first asset is registered as an association with a specific first blockchain asset on a blockchain-based ledger, which ledger is arranged to keep track of blockchain transactions concerning the blockchain asset in question from senders to specified blockchain asset addresses, which blockchain transactions are signed using a respective private cryptographic key belonging to the sender in question, which association is arranged so that the association remains as an association between the first asset and a blockchain asset, in a way which is verifiable on the said ledger, after a transaction involving the blockchain asset in question, which second asset is either a second blockchain asset on the ledger in question or an asset registered as an association with a specific second blockchain asset on the said ledger, which computer server is characterised in that the computer server is arranged to electronically receive, from a selling first party, a signed first blockchain transaction part comprising a first input blockchain transaction leg concerning the first blockchain asset in question; and receive, from a buying second party, a signed second blockchain transaction part comprising a second input blockchain transaction leg concerning the second blockchain asset in question; combine the first and second blockchain transaction parts in a single combined blockchain transaction comprising the first input blockchain transaction leg, the second input blockchain transaction leg, a first output blockchain transaction leg concerning the first blockchain asset and a second output blockchain transaction leg concerning the second blockchain asset; and publish the combined blockchain transaction on the blockchain ledger.

In such a computer server, the first output blockchain transaction leg may be arranged to direct a first blockchain asset amount to a first output blockchain asset address, the second output blockchain transaction leg may be arranged to direct a first blockchain asset amount to a second output blockchain asset address, the computer server may further be arranged to receive the said first and second output blockchain asset addresses before receiving said signed blockchain transaction parts, and the computer server may further be arranged to provide the first output blockchain asset address to the first party and to provide the second output blockchain asset address to the second party before receiving said signed blockchain transaction parts.

The computer server may further be arranged to receive at least one of a first return blockchain asset address and a second return blockchain asset address, and in that the computer server is arranged to provide the first return blockchain transaction part to the second party and to provide the second return blockchain transaction part to the first party before receiving said signed blockchain transaction parts.

The computer server may be arranged to verify the first and second blockchain assets in terms of blockchain integrity; ownership; and/or amount; and/or to verify that the first blockchain asset originates from a predetermined genesis blockchain address; and the computer server may be arranged not to publish the combined blockchain transaction unless the verification in question is positive.

The computer server may be arranged to provide a genesis blockchain address which is associated with a genesis public cryptographic key in turn being associated with a genesis private cryptographic key privately held by the computer server, and in that the computer server is arranged to provide the first blockchain asset as a blockchain asset which has previously been spent from the said genesis blockchain address.

A particular defining amount of the first blockchain asset may correspond to one unit of the first asset, and in that the computer server is arranged to provide a transaction spending a certain amount of the first blockchain asset from the genesis blockchain address involving an even number of said defining amount of the first blockchain asset.

The computer server may be arranged to provide a digital interface using which external parties can participate in a bidding, quotation or request for quote process, during or as a result of which the first party is provided with information regarding the second blockchain asset making it possible for the first party to verify the blockchain integrity of the second blockchain asset, and during or as a result of which the second party is provided with information regarding the first blockchain asset making it possible for the second party to verify the blockchain integrity of the first blockchain asset.

The computer server may further be arranged to perform a combined blockchain transaction verification step, after the combined blockchain transaction has been published on the blockchain, which combined blockchain transaction verification step comprises waiting until the blockchain that the combined blockchain transaction forms part of has been mined to a predetermined depth and then to finalize the asset transaction.

Moreover, the invention relates to a client computer for performing an asset transaction in which a first asset is exchanged for a second asset, which first asset is either a first blockchain asset registered on a blockchain-based ledger or an asset registered as an association with a specific first blockchain asset on the ledger in question, which second asset is either a second blockchain asset on the ledger in question or an asset registered as an association with a specific second blockchain asset on the said ledger, which ledger is arranged to keep track of blockchain transactions concerning the blockchain asset in question from senders to specified blockchain asset addresses, which blockchain transactions are signed using a respective private cryptographic key belonging to the sender in question, wherein at least one of the first and second assets is registered as such an association, which association is arranged so that the association remains as an association between the first asset and a blockchain asset, in a way which is verifiable on the said ledger, after a transaction involving the blockchain asset in question, which client computer is characterised in that the client computer is arranged to receive and verify, on the ledger, information regarding a second blockchain transaction part comprising a second input blockchain transaction leg concerning the second blockchain asset in question; to identify and sign a first blockchain transaction part comprising a first input blockchain transaction leg concerning the first blockchain asset in question; to provide the signed first blockchain transaction part to a central server; to receive information regarding a single combined blockchain transaction from the central server; to verify, on the ledger, that the combined blockchain transaction comprises, as input blockchain transaction legs, the first and second input blockchain transaction legs, and that the combined blockchain transaction comprises, as an output transaction legs, a blockchain transaction leg transferring the second blockchain asset to a specified second blockchain destination address.

In particular, such a client computer may further be arranged to verify that at least one of the first and second input blockchain transaction legs is allocated to a predetermined and identifiable input leg of the combined blockchain transaction.

Furthermore, the second asset is an asset registered as an association with a specific second blockchain asset on the said ledger, and the client computer may further be arranged to verify that a previous combined blockchain transaction involving the second blockchain asset comprised an output blockchain transaction leg involving the second blockchain asset, and that this output blockchain transaction leg was allocated to or corresponded to a predetermined and identifiable input leg of the previous combined blockchain transaction in question.

The client computer may further be arranged to provide, to the central server or to a counter party, the said second blockchain destination address, and to receive, from the central server or from said counter party, a first blockchain asset destination address.

The client computer may further be arranged to provide, to the central server or to a counter party, a first blockchain return address, and/or to receive, from the central server or from said counter party, a second blockchain asset return address.

Any first blockchain asset destination address or second blockchain asset return address received by the client computer may be comprised in said first input blockchain transaction part which is signed.

Also, the first and/or second asset may be a respective asset registered as an association with the first or second blockchain asset, respectively, on the ledger, the client computer may comprise a digital party interface, and the digital party interface may allow the party (U) to place orders, quotes and/or requests for quotes in terms of the first and/or second asset.

Also, the invention relates to a computer software product for settling an asset transaction in which a first asset is exchanged for a second asset, which first asset is registered as an association with a specific first blockchain asset on a blockchain-based ledger, which ledger is arranged to keep track of blockchain transactions concerning the blockchain asset in question from senders to specified blockchain asset addresses, which blockchain transactions are signed using a respective private cryptographic key belonging to the sender in question, which association is arranged so that the association remains as an association between the first asset and a blockchain asset, in a way which is verifiable on the said ledger, after a transaction involving the blockchain asset in question, which second asset is either a second blockchain asset on the ledger in question or an asset registered as an association with a specific second blockchain asset on the said ledger, which computer software product is characterised in that the computer software product, when executed on a computer server, is arranged to allow the computer server to electronically receive, from a selling first party, a signed first blockchain transaction part comprising a first input blockchain transaction leg concerning the first blockchain asset in question; and to receive, from a buying second party, a signed second blockchain transaction part comprising a second input blockchain transaction leg concerning the second blockchain asset in question; combine the first and second blockchain transaction parts in a single combined blockchain transaction comprising the first input blockchain transaction leg, the second input blockchain transaction leg, a first output blockchain transaction leg concerning the first blockchain asset and a second output blockchain transaction leg concerning the second blockchain asset; and publish the combined blockchain transaction on the blockchain ledger.

Finally, the invention relates to a computer software product for performing an asset transaction in which a first asset is exchanged for a second asset, which first asset is either a first blockchain asset registered on a blockchain-based ledger or an asset registered as an association with a specific first blockchain asset on the ledger in question, which second asset is either a second blockchain asset on the ledger in question or an asset registered as an association with a specific second blockchain asset on the said ledger, which ledger is arranged to keep track of blockchain transactions concerning the blockchain asset in question from senders to specified blockchain asset addresses, which blockchain transactions are signed using a respective private cryptographic key belonging to the sender in question, wherein at least one of the first and second assets is registered as such an association, which association is arranged so that the association remains as an association between the first asset and a blockchain asset, in a way which is verifiable on the said ledger, after a transaction involving the blockchain asset in question, which computer software product is characterised in that the computer software product, when executed on a client computer, is arranged to allow the client computer to receive, and to verify, on the ledger, information regarding a second blockchain transaction part comprising a second input blockchain transaction leg concerning the second blockchain asset in question; identify and sign a first blockchain transaction part comprising a first input blockchain transaction leg concerning the first blockchain asset in question; provide the signed first blockchain transaction part to a central server; allow the client computer to receive information regarding a single combined blockchain transaction from the central server; verify, on the ledger, that the combined blockchain transaction comprises, as input blockchain transaction legs, the first and second input blockchain transaction legs, and that the combined blockchain transaction comprises, as an output transaction leg, an output blockchain transaction leg transferring the second blockchain asset to a specified blockchain destination address.

In the following, the invention will be described in detail, with reference to exemplifying embodiments of the invention and to the enclosed drawings, wherein:
Figures 1 and 2 are respective overviews of a system according to the present invention;
Figure 3 is a flow chart illustrating a method according to a first aspect of the invention;
Figure 4 illustrates an exemplifying combined transaction of the present type;
Figures 5 and 6 are respective flow charts illustrating the issuance process of an asset; and
Figure 7 is a flow chart illustrating a trade performed and settled according to the present invention.

In general, a blockchain public key, or address, is an account using which a payment, or balance, can be received from a payer. Balances, unspent-transaction-outputs (UXTO), in turn, are digital properties controlled by the holder of the corresponding private key associated with a specific blockchain public key. Transactions are constructed by collecting the UTXO, providing the appropriate unlocking scrips by means of applying the private key associated with the public key holding the UXTO, and then constructing new outputs assigned to a new public key or keys.

Throughout this description, the terms "blockchain-based asset address" and "public key" may be used in an interchanging manner, and it is realized that the two correspond to each other or that at least one is derivable from the other.

A transaction may then be propagated by forwarding to connected nodes who each validate the transaction. Validated transactions, in turn, are aggregated into blocks, which may become part of the shared ledger. This way, the blockchain is gradually constructed, containing the cryptographic proof of several previous transactions, possibly even the entire history of all transactions in the asset in question.

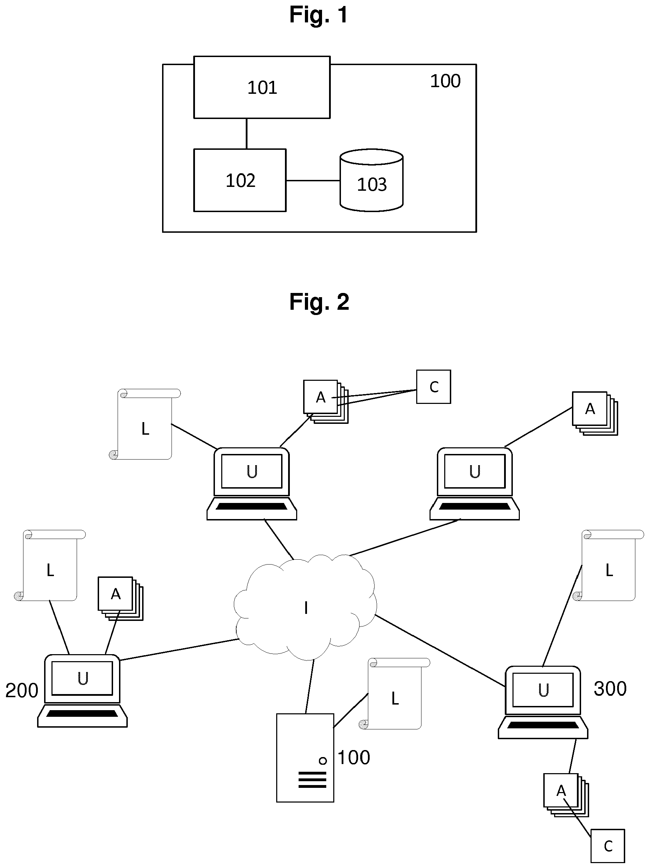

Figure 1 illustrates a central server 100 according to the present invention, comprising a digital API or interface 101, arranged to communicate with parties (parties), financial institutions etc. via the internet. The central server 100 further comprises a digital logic unit 102, in turn comprising a CPU or similar, and a database 103. The database 103 may be used to store relevant state data, such as participant registers and information; order books; current state of transactions; and so forth. The database 103 may also comprise current balances of cash deposit accounts for connected trading participants or parties, and in particular the below-described position asset token account balances.

It is realized that the central server 100 may be fully implemented on a standalone physical or virtual server, or in a distributed manner across several such physical or virtual servers, as the case may be. The central server 100 may also be implemented as a component in a larger system. The functionality described herein may in general be implemented fully in software, or using a combination of hardware and software. Herein, the term "central server" denotes a functionally defined entity performing certain central server functionality. The corresponding applies also to the client computer described below.

Figure 2 illustrates an example of a network in which the central server 100 may be used according to the invention. I denotes the internet, interconnecting the central server 100 as well as a number of parties or participants U. The parties U are stakeholders in a blockchain-based ledger L, such as the bitcoin ledger, or any other such ledger. At least some of the parties U, such as at least the buying and selling parties U, control, comprise or have access to respective copies of the ledger L. Some parties U may instead use external ledger services or similar. The central server 100 preferably also controls, comprises or has access to a respective copy of the ledger L. The ledger L of each party U may be identical to the ledgers L of other parties U, or different parties U may control differing subsets of a master ledger L. It may also be the case that the respective ledger L of different parties U at any one given time may be updated to different extents, due to network lag and similar. In the following, it is assumed that there is one unambiguous version of the ledger L which may be digitally and electronically accessed by any party U.

In general, the parties U can transfer blockchain-based assets between them directly and bilaterally, over the internet I. Such transfers, called blockchain-based transactions, are conducted from one blockchain address A to another blockchain address. Each party U may control one or several such blockchain addresses A.

As used herein, an "address" is an identifying piece of information, which is, or is unambiguously associated with, a public key of the above described type, which public key is recognized by the parties U for use in verifying transaction signatures concerning the blockchain asset in question. That the address may be unambiguously associated with the public key means that it is possible to at least unambiguously identify the public key starting off from the address and/or unambiguously identify the address starting off from the public key. This may imply following a link or association, or the use of a predetermined algorithm, comprising hash calculations, binary-to-text encodings, etc.

It is understood that the method steps described herein, in which the parties U are involved, are generally performed by a corresponding electronic client computing device of the party U in question. Preferably, such a client computing device is a general-purpose computer, smartphone or similar, and the method steps are in general automatically performed using a piece of client computer software product which is executed on or from the client computing device in question. For instance, such client software functionality may be installed as a local application running on the hardware of the client computing device in question; a remote client software running on the central server 100 or anywhere else and accessed as a web service or similar over the internet I, or any suitable combination of such approaches. In particular, the functionality may be performed in a web browser or corresponding. The functionality may also be implemented in a combination of software and hardware, as the case may be. Moreover, the client computing device may be virtual, such as accessed remotely by a trading party U; arranged to perform automatic/algorithmic trading; and so on. What is important is that the functionality performed by the client computing device is logically separated from that of, and in digital communication with, the central server 100, and preferably accessed by the party U in question using a personalized, secure login or similar. In the following, the terms "client", "client computing device" and "client computer" will be used interchangingly to denote this functionality.

Preferably, the party U is securely logged into the client computer, which is securely logged into the central server 100, possibly in one and the same login function so that the party U logs in directly on the central server 100 using the client computer.

Each of the blockchain-based assets A may be coloured, meaning that it is associated with a particular external asset C, such as a real-world physical asset, and carries the value of the external asset C in question on the blockchain ledger L on which the blockchain-based asset A is registered. Typically, this involves the inclusion of certain metadata on the blockchain in question, or external linking to such metadata, in a verifiable way (so that the metadata inclusion or linking is a necessary condition for later being able to verify the retrospective integrity of the blockchain as a whole), which metadata represents or links to the real-world asset C in question. As shown in Figure 2, one such real-world asset C may be represented by several blockchain-based assets A, and the opposite is also possible.

In general, the present invention is concerned with the trade of such external assets C ("first asset"), for other external assets C (represented by coloured blockchain-based assets A), or for non-coloured blockchain-based assets A ("second asset"), in trade transactions registered on a blockchain ledger L.

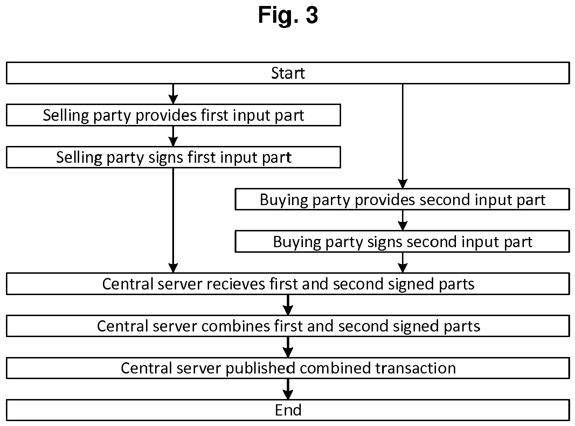

Figure 3 illustrates a method according to a first aspect of the invention, for settling such an asset transaction. In the particular asset transaction presently described, a first asset is exchanged for a second asset.

The first asset is an external asset C of the above discussed type, and is hence registered as an association (colouring) with a specific first blockchain asset A on a blockchain-based ledger L, which ledger L is arranged to keep track of blockchain transactions concerning the blockchain asset A in question from senders to specified blockchain asset addresses. Such blockchain transactions are signed using a respective private cryptographic key belonging to the sender in question, as is well-known in the art as such.

In general, said association may be of the above-discussed type, and is typically arranged so that the association remains as an association between the first asset C and a blockchain asset A, in a way which is verifiable on the said ledger L after a transaction involving the blockchain asset A in question. Hence, the blockchain asset A may be transacted further, being spent in several subsequent transactions to additional blockchain addresses, as a whole or split up into smaller blockchain sub-assets. Several smaller blockchain assets A may also be combined into one single asset A in a transaction. However, the association to the external asset C will remain provable to any party U having access to the ledger L, for instance by inspecting the above-discussed metadata forming part of the said first-generation transaction.

The second asset is either a second blockchain asset A on the ledger L in question or an external asset C of the said general type, registered as an association with a specific second blockchain asset A on the said ledger L.

In other words, the transaction performed by the present method is for transacting a first external asset C for either a second external asset C or a second blockchain asset A. Said first external asset C is associated with, and carried/represented by, a corresponding first blockchain asset A. If a second external asset C is used, it is associated with, and carried/represented by, a corresponding second blockchain asset A.

In a first step, the method starts.

In a subsequent step, a selling first party U provides and signs a first blockchain transaction part, comprising a first input blockchain transaction leg concerning the first blockchain asset A in question. Also, a buying second party U provides and signs a second blockchain transaction part, comprising a second input blockchain transaction leg concerning the second blockchain asset A in question. The providing and signing by the first party may take place in any order in relation to the providing and signing by the second party. However, it is preferred that the signing by any party U is not performed until that party U has received, preferably via the central server 100, and reviewed, preferably using the party's client computer, the respective blockchain transaction part of the counterparty U. This will be described in detail below.

In a preferred embodiment, the said signing performed by the first party U is performed independently from the said signing performed by the second party U, and the central server 100 then receives the signed blockchain transaction parts from the respective first and second party U independently of the respective other party U, at least with respect to the said signing steps.

By a "blockchain transaction part" is meant a part of a blockchain transaction, comprising one or several input or output blockchain transaction legs. In general, a blockchain transaction is constituted by at least one such input leg and at least one such output leg. An input leg specifies an UTXO, which may be used in the transaction in question, and an output leg specifies a valid blockchain address to which the blockchain asset in question can be spent as a result of the transaction. In general, all input and output legs of one and the same blockchain transaction involves various amounts of the same type of blockchain asset A (irrespectively of any colouring used). In practise, such as when using bitcoin, the first and second blockchain transaction parts may each comprise all input and output legs of the combined transaction (see below), however certain particulars (such as the script of input leg(s) provided by the counterparty) non-specified, such as nulled.

That a blockchain transaction part is "signed" means that a party controlling the private key of the UTXO in question applies this private key to the transaction part, so that it is ready to be published on the relevant blockchain in question as a part of the transaction. The "transaction part" which is signed may hence comprise information in addition to the input transaction leg in question, such as several input legs of the party U in question. Preferably, the transaction part also comprises at least one input transaction leg provided by the counterpart U, either via the central server or via direct intra-party U communication. Preferably, the transaction part which is signed may comprise information regarding all input and output legs of the combined transaction, hence also comprising any destination and return addresses used. In this case, each party U needs to be provided, before signing of its respective transaction part, with any input, destination and return addresses originating from the counterpart U to the transaction. Such provision may take place via the central server or directly between the parties U. It is noted that this does not imply that the signed transaction part of a particular party is shared with the counterparty, only the relevant input and output transaction legs, as applicable.

In a subsequent step, the central server 100 electronically receives the signed first and second blockchain transaction parts from the parties U. However, it is preferred that the first party U does not provide the signed first transaction part to the second party U, and that the second party U does not provide the signed second transaction part to the first party U. In particular, after this step, the central server 100 is preferably the only entity having been provided with the signed first and second transaction parts from said respective first and second party U.

In a subsequent step, the central server 100 combines the received and signed first and second blockchain transaction parts in a single combined blockchain transaction comprising the said first input blockchain transaction leg, the said second input blockchain transaction leg, a first output blockchain transaction leg concerning the first blockchain asset and a second output blockchain transaction leg concerning the second blockchain asset.

Such a "combined" blockchain transaction is preferably a complete blockchain transaction in and of itself, comprising a number of input legs (such as said first and second input legs) and a number of output legs (such as the said first and second output legs), in a way so that the sum of the corresponding respective blockchain asset A amounts of the respective input legs is equal to the sum of the corresponding respective blockchain asset A amounts of the respective output legs, and so that the combined transaction is hence balanced. The combined transaction may also comprise a transaction fee output leg. As mentioned, the combined transaction may furthermore comprise additional legs, such as one or several return output legs. Moreover, the combined transaction may be arranged in a way making the various input and/or output legs traceable, as will also be detailed below.

In a preferred embodiment, the central server 100 is arranged to receive both of said first and second output blockchain transaction legs, or, in practice, both of said first and second output blockchain asset addresses to which the blockchain asset in question is sent in the respective output leg in question, before combining them in said single combined blockchain transaction.

In a subsequent step, the central server 100 publishes the said combined blockchain transaction on the blockchain ledger L. Such publishing is conventional as such, and will not be described in detail herein. However, such publishing typically comprises linking the combined transaction into the blockchain ledger L in such a way so that it is later possible to reliably prove the existence and contents of the combined transaction for any party U with access to the ledger L in question.

Hence, an external asset C, namely the one associated with the first blockchain asset A, can be sold from the first party U to the second party U, with the second asset (a blockchain asset A of the same type in its own right or an external asset C represented by a blockchain asset A of the same type as the first blockchain asset A) as payment. Each of the first and second assets may have a certain respective value amount in the blockchain currency they represent, respectively. For the first asset, the blockchain currency value, in current monetary terms, is preferably insignificant as compared to a current monetary value of the external asset C represented by the blockchain asset A in question.

The total asset transaction, including delivery of the first asset and the payment, is preferably defined by the first and second transaction parts, preferably by each of said first and second transaction parts, the signature of which parts are all part of one and the same combined blockchain transaction. In other words, this combined transaction is atomic in the sense that all input and output transaction legs are published on the blockchain, as parts of the combined transaction, at the same time.

Using such a method, it is possible for each party U to the combined transaction to participate therein without having to trust the counterparty U. No delivery of the sold first asset, or the payment, takes place before the counterparty U also fulfils her obligation, and the combined transaction is completely visible and verifiable on the blockchain ledger L in question. Since the first external asset C is reliably associated with the transferred first blockchain asset A on the blockchain, the transfer of the particular amount of the first external asset C is safely conducted to the second party U. The corresponding is true regarding the specified payment amount to the first party U.

Specifically, the parties U to the trade use a structured order messaging flow, via interface 101, as a part of which the central server 100 can push the "merged" combined transaction to the public blockchain without the parties U incurring counterparty U risks associated with sending a half signed transaction to the trade counterparty U.

In particular, it is preferred that the said one or two associations, between the first blockchain asset A and the first external asset C, and possibly also between a second external asset C and the second blockchain asset A, respectively, are blockchain colouring associations of the type described above. However, the present invention works also for other types of external asset C association mechanisms involving the secure tying of the association in question into the blockchain asset A on the ledger L.

According to a preferred embodiment, the said combined blockchain transaction is a so-called coinjoin blockchain transaction. Herein, a "coinjoin transaction" is a transaction comprising at least two input transaction legs originating from different blockchain addresses, and in particular preferably comprising at least two input transaction legs originating from different blockchain addresses as well as at least two output transaction legs. The input legs preferably originate from blockchain addresses being controlled by different parties U. In other words, from different blockchain addresses with corresponding private cryptographic keys privately held by different parties U.

Moreover, it is preferred that the combined transaction is an all-or-none transaction, which is atomic in the sense that either all input and output transaction legs included in the combined transaction in question, or none, form part of the combined transaction being published on the blockchain in question. Such atomicity may be provided as a part of the definition of the used blockchain asset A as such, or be defined for each combined transaction using a suitable scripting language or the like, which scripting language in that case forms part of the definition of the blockchain asset. What is important is that the combined transaction definition makes it impossible to achieve a validly verifiable combined transaction on the blockchain in question unless all transaction legs are included in the published combined transaction.

It is preferred that all asset transactions handled by the central server and involving external assets C of the above described type are atomic transactions in which a certain amount of external asset C, via blockchain asset A colouring, is swapped for a particular amount of blockchain asset A reflecting a used price (in blockchain asset A) for the external asset C.

In a preferred embodiment, the first party U is not provided with the signed second blockchain transaction part, and the second party U is not provided with the signed first blockchain transaction part, at least not before the combined transaction is published on the blockchain. This may for instance take place by the parties U only providing to the central server 100 the signed transaction parts, as described above, in a way which is not open for inspection or eavesdropping by external parties, and in particular not to the respective counterpart party U of the trade at hand. The central server 100 will then keep the received signed transaction parts private and secret at least until the combined transaction is published. This prevents the parties to use a signed transaction part originating from a counterpart party U in an own transaction. In case the transaction is not performed, such as if a transaction verification step fails or if a sinned transaction part is not received from both parties, the central server 100 may discard any received signed transaction part.

It is furthermore preferred that the first output blockchain transaction leg discussed above is addressed to a first destination blockchain address, to which the first blockchain asset A is spent in the first output blockchain transaction leg in said atomic transaction. It is preferred that this first output blockchain asset address is provided by the second party U, as a destination address to which the second party U wishes the bought blockchain asset A, carrying the bought first external asset C, is to be directed. Similarly, it is preferred that the second output blockchain transaction leg is addressed to a second destination blockchain address, which preferably is provided by the first party U as an address to which the payment (the second blockchain asset A) is to be directed, to which second destination address the second blockchain asset A is spent in the second output blockchain transaction leg.

These first and second destination addresses are preferably provided by the respective parties U to the central server 100, also via interface 101. In this case, the central server 100 preferably provides the first destination address to the first party U, and the second destination address to the second party U, so that the party U in question can use the respective destination address in its construction of the transaction part to be signed as described above. Alternatively, the first party U may provide the second destination address directly to the second party U, and the second party U may provide the first destination address to the first party U. It is noted that these destination addresses are not signed at this point, but used for building the respective transaction part.

Hence, the parties U may have full control over the combined transaction output addresses regarding the transacted assets, and may provide their own desired destination addresses directly, as opposed to using a trusted custodian which keeps intermediary holding accounts for the transacted assets. According to the present invention, it is preferred that the central server 100 does not hold any blockchain assets A on behalf of the parties U, at least not such blockchain assets A pertaining to the asset trade being performed, at least not during the performance of the trade in question.

In a corresponding manner, it is preferred that the first party U may provide to the central server 100 a first blockchain asset return address and/or that the second party U provides to the central server 100 a second blockchain asset return address. Then, any remaining first and second blockchain asset A amount, respectively, is allocated, such as by each party, in the transaction parts, and as a result later in the combined transaction, to said respective return address after a determined first and second blockchain amount A, respectively, has been allocated transaction parts, and hence later in the combined transaction, to the said first and second destination blockchain address, respectively. In other words, each party U may or may not provide to the central server 100 a respective UTXO an amount of which is larger than the one to be used in the transaction and transferred to the counterparty U, and the change is then preferably allocated, in the same atomic combined transaction, to a previously specified return blockchain address provided by each respective party. In this case, the respective received UTXO, preferably along with specified return addresses, as applicable, may be provided, by the central server, to the counterparty U. Alternatively, the parties U may provide each other, directly, with the UTXO and return address information.

Hence, the central server 100 may preferably be arranged to receive, via interface 101, said first and/or second return blockchain asset addresses, and to then forward this information to the other party U than the one providing it to the central server 100. Each party U then produces the respective transaction part, allocating any remaining first and second blockchain asset amount, respectively, to said respective return address after a determined first and second blockchain amount, respectively, has been allocated in transaction part in question to respective first and second destination blockchain addresses.

Each of the first and second transaction parts constructed and signed by each party U may preferably comprise all input and output (destination and return addresses) legs, and substantially correspond to the other transaction part. This is, for instance, the case when using Bitcoin and the SIGHASH_ALL signature hash flag in the combined transaction. In order to construct a transaction part of this particular type, each party U needs complete information regarding all input and output legs of the combined transaction before being able to construct and sign the transaction part in question. As explained above, each party U already has access to some of this information (for instance, the selling party U already has knowledge of her own first blockchain asset address), while other information needs to be provided by the counterparty U, such as directly or via the central server 100. This provision step is performed before signing, so the information exchanged between the parties U cannot be used by one party U to on her own validly construct, sign and publish a combined transaction involving the complete trade.

In particular, it is preferred that the first output blockchain transaction leg is addressed to a first destination blockchain address, provided to the first party U before the signing of the transaction part and preferably provided by the second party U, to which the first blockchain asset A is spent in the first output blockchain transaction leg, and that the second output blockchain transaction leg is addressed to a second destination blockchain address, provided to the second party U before the said signing and preferably provided by the first party U, to which the second blockchain asset A is spent in the second output blockchain transaction leg.

Correspondingly, it is preferred that the second party U is provided, before the said signing, with a first blockchain asset return address, that the first party U is provided, before the said signing, with a second blockchain asset return address, that any remaining first and second blockchain asset A amount, respectively, is allocated in each of the transaction parts to said respective return address after a determined first and second blockchain amount, respectively, has been allocated in each of the transaction parts to the said first and second destination blockchain address, respectively.
It is also possible, in particular blockchain asset classes and in contrast to what has been described above, that the first and second transaction parts do each not comprise all input and output legs of the combined transaction. In this case, the first and second transaction parts nevertheless together comprise information regarding all input and and output legs of the combined transaction.

It is in general preferred that the buying party U always pays in full any blockchain-related transaction costs. This provides a mechanism for the parties U and the central server 100 to know in advance all transaction leg components, even though transaction costs must be paid as a part of the transacted blockchain assets A. Specifically, it is preferred that any blockchain currency transaction cost (fees) for the combined blockchain transaction is deducted, by preferably by each of the parties U providing the transaction parts, in its entirety from the second blockchain asset A amount before the second blockchain asset A amount is allocated in the transaction parts in question to the said second return blockchain address.

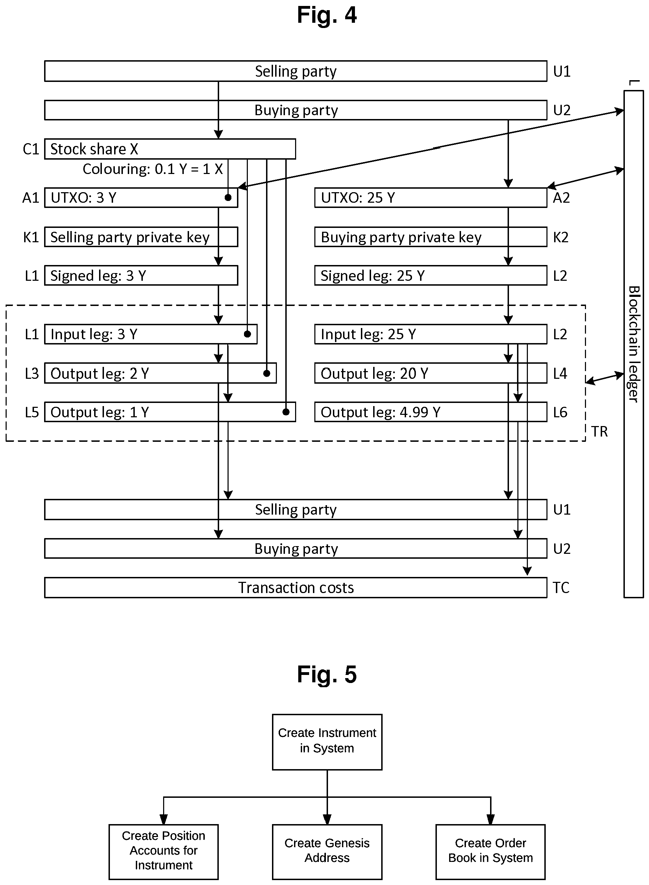

Figure 4 illustrates the combined transaction TR and its component transaction leg parts as described above, in an example in which a first party U1 sells ten entities of an external asset C1, for instance in the form of a company share stock X, which external asset C1 is carried by a coloured blockchain asset A1, such as the blockchain currency Y, for instance defined so that 0.01 entities of Y corresponds to one share stock X entity. It is understood that, in the preferred case in which both transaction parts comprise all inputs and outputs of the combined transaction, Figure 4 equally well illustrates each of the first and second transaction parts.

A second buying party U2 pays for the shares using a blockchain asset A2, in this case a price of 2 entities of blockchain currency Y per stock share X, in total 20 currency Y entities. It is noted that the payment blockchain asset A2 may be non-coloured, or coloured in a different way than the first blockchain asset A1. In other words, it may be coloured to carry some other asset than the stock share X, or may not be coloured at all.

It is furthermore noted that the blockchain currency Y is the same for both assets A1, A2, the difference only being the colouring of the blockchain currency Y used by the first party U1 being different from the one used by the second party U2.

The blockchain currency Y in question is registered on the blockchain ledger L.

The first party U1 controls a first blockchain asset A1 UTXO of 0.3 entities of currency Y, which is signed by the first party U1 using her privately controlled private cryptographic key K1, so as to produce a first signed transaction input leg L1. Correspondingly, the second party U2 controls a second blockchain asset A2 UTXO of 25 entities of the same currency Y, which is signed by the second party U2 using her privately controlled private cryptographic key K2, so as to produce a second signed transaction input leg L2.

The central server 100 is provided said signed first and second transaction parts, comprising legs L1, L2 as described above, by the respective parties U1, U2. However, the parties U1, U2 do not interchange the signed transaction parts with each other - information is only exchanged between the parties, such as via the central server 100, concerning the respective legs L1, L2, and in particular concerning the UTXO:s A1, A2 in question. It is understood that each leg L1, L2 in itself may involve one or several UTXOs, together amounting at least to the required amount. The parties U1, U2 may also provide to the central server 100 a respective delivery blockchain address for the respective acquired asset A1, A2, as well as a respective return blockchain address for any surplus provided blockchain asset A1, A2 amount.

In general, the parties U share, such as via the central server 100, information regarding the legs L1-L6 so that they can each construct the first and second transaction parts defining all input and output legs of transaction TR. However, as described above, certain information regarding input legs not to be signed by the party U in question, such as scripts, may be nulled or otherwise left out.

Hence, each of the parties U assembles all information and creates a respective transaction part, comprising the following transaction legs:
- The first input blockchain asset A1 leg L1;
- The second input blockchain asset A2 leg L2;
- An output first blockchain asset A1 leg L3, directed to the delivery address provided by the second party U2, carrying the coloured asset A1 and hence the sold stock shares X;
- An output second blockchain asset A2 leg L4, directed to the delivery address provided by the first party U1, carrying the (non-coloured) Y currency payment for the stock shares X;
- An output first blockchain asset A1 leg L5, directed to the return address provided by the first party U1, carrying the change of 0.1 Y (coloured) for the 0.3 Y (coloured) UTXO provided by the first party U1;
- An output second blockchain asset A2 leg L6, directed to the return address provided by the second party U2, carrying the change of 5 Y for the 25 Y UTXO provided by the second party U2, after deduction of transaction costs of 0.01 Y;

Hence, the first and second transaction parts are each constructed independently by the respective party U, and each comprises the same input and output legs. They are then individually signed by each party U and the signed transaction part is provided to the central server 100.

The central server 100, in turn, combines the received signed first and second transaction parts so as to for the combined transaction TR, which is then published on the ledger L as an atomic blockchain transaction.

In a preferred embodiment, at least one of the first and second input blockchain transaction legs L1, L2, preferably at least the first blockchain transaction leg L1, is allocated to a predetermined and identifiable input leg (leg number) of the resulting combined blockchain transaction TR. This allows the use of a combined transaction TR structure which is designed so that obfuscates information concerning which inputs were spent as which outputs, as is the case for instance with a bitcoin coinjoin transaction, while still allowing the central server 100 to keep track of the coloured blockchain assets A1 inputs and outputs of the transaction. As a result, the central server 100 can guarantee that the kept position accounts are correct and verifiable over time.

For instance, the first input blockchain transaction leg L1 may be allocated on the #0 combined transaction TR path, in other words the coloured blockchain asset transaction input leg L1 is always located in a certain path of the combined transaction TR, making it possible to retroactively un-obfuscate the merging of inputs and outputs of the combined transaction, and hence to keep track of the coloured blockchain asset A1 inputs and outputs of a particular transaction.

In general, the central server 100 may preferably be arranged to manage party U accounts regarding external assets C, and to execute operation and matching activities relating to such external assets C and such accounts. Preferably, external assets C registered in the central server 100, such as in database 103, are also settled by the central server 100.

The central server 100 may also automatically provide the colouring of the blockchain assets A described herein.

All such activities may be based entirely on automatic data processing by the central server 100, and communication of account updates is carried out by means of provable payment on the blockchain in question, in exchange for provable delivery of position account tokens, in other words coloured blockchain assets A representing external asset C, on the same blockchain.

In other words, the settlement of external asset C instruments takes place against a blockchain asset A, where such position account tokens are exchanged for a blockchain asset A, and upon settlement finality, the central server 100 may update the position account in question by crediting and debiting the respective position accounts in the central server 100.

Preferably, such "settlement finality" is determined to occur after sufficient mining has been performed of the blockchain. More specifically, the method may comprise a blockchain combined transaction verification step, performed by the central server 100 after the publishing of the combined transaction on the ledger, comprising waiting until the blockchain that the combined blockchain transaction forms part of has been mined to a predetermined depth, and the asset transaction may thereafter be finalized. In the exemplifying case of the bitcoin blockchain, a mining depth of 6 will in general be sufficient.

All matching and settlement by the central server 100 is preferably bilateral. Settlement may take place on a gross basis, transaction-by-transaction, at the point of execution. The principle delivery-versus-payment may apply to all transactions handled by the central server 100.

Price discovery may preferably be conducted through an RFQ (Request For Quote) negotiation process, initiated by a requesting party U. Such RFQ, which is provided from the requesting party U to the central server 100, may act as a non-binding solicitation for a quote providing the basic terms for a responding party U to formulate a response to the requesting party U, which response is submitted from the responding party U to the central server 100. Interface 101 may be used for all such communications.

In particular, a method according to the invention may comprise a bidding, quotation or request for quote step, performed before the combination of the transaction legs into the combined transaction. During or as a result of such a bidding, quotation or RFQ step, the first party U may be provided with information regarding the second blockchain asset A, making it possible for the first party U to verify the blockchain integrity of the second blockchain asset U. Similarly, the second party U may be provided with information regarding the first blockchain asset A, making it possible for the second party U to verify the blockchain integrity of the first blockchain asset A. Herein, "blockchain integrity" refers to the existence of a validly spendable UTXO, which is preferably traceable, using information publicly available on the ledger L, all the way back to an origination transaction on the blockchain of the asset A in question.

The central server 100 hence deals with settlement, and aims at guaranteeing account holding parties U a final and irrevocable settlement by means of delivery-versus-payment. This means that no account holding party will be at risk of delivering an external asset C to another account holding party without receiving payment, and vice versa.

Preferably, the central server 100 does not run such settlement operations as a central blockchain asset-holding counterparty. Instead, settlement by the central server 100 presupposes that sellers possess the required position account tokens (coloured blockchain assets A), representing position account balances of the external asset C in question, and that buyers possess a specified blockchain asset A balance.

For the settlement of position account balances, the account holding party may deliver the position account token(s) representing the external asset C in question on the position account to its trade counterparty U, and the trade counterparty U may pay with the blockchain asset A in question, thereby notifying the central server 100 to affect an external asset C registry update upon settlement finality.

In a preferred embodiment, the central server 100 is arranged to manage parties' U position accounts by relating each coloured asset A to a so-called genesis blockchain address. Hence, the method according to the invention in this case comprises an initial set of steps for creating position accounts and coloured assets A, as well as populating such position accounts with such coloured assets A, as illustrated in Figure 5 and according to the following.

Specifically, when a new instrument in the form of an external asset C represented by a coloured blockchain asset A is created in the system, a respective position account is created in the central server 100 for account holding parties U in the central server 100 that should be able to hold account balances of the instrument in question.

Furthermore, a genesis blockchain address is created by the central server 100, from which genesis address all position account tokens relating to the Instrument in question will be issued, and to which genesis address such position account tokens are also validated. The genesis address is funded, via a corresponding blockchain transaction automatically effected by the central server 100, with an amount of position account tokens which is sufficient to cover the needs of the account in question. The genesis address may also be refunded at a later point in time, in case this is needed for supporting the adding of additional instrument quantity (coloured blockchain asset A amount). It is important to note that only the central server 100 has control over the private cryptographic key which controls the genesis address. It is further noted that such a private key in blockchain technology is typically used to create a corresponding public cryptographic key, which may then constitute, or be used to create, a blockchain address, such as the genesis address in question.

Preferably, it is the central server 100 who performs the colouring of the position account token blockchain assets A provided to the genesis address, which colouring is performed in a predetermined manner which is known to the central server 100.

Preferably, the genesis blockchain address is associated with a genesis public cryptographic key in turn being associated with said genesis private cryptographic key, which is privately held by the central server.

Hence, the central server 100 may preferably be arranged to provide said genesis blockchain address, which is associated with said genesis public cryptographic key in turn being associated with said genesis private cryptographic key privately held by the central server 100, and the central server 100 may furthermore be arranged to provide the first blockchain asset A as a blockchain asset which has previously been spent from the said genesis blockchain address.

Hence, according to one embodiment, the first blockchain asset A is a blockchain asset which has previously been spent from a genesis blockchain address of the above type, from which all blockchain assets A being associated with the said external asset for the purposes of the present method have been previously spent.

If a party U loses one or several of their blockchain private keys, so that they cannot control their position account tokens, they may still be considered (by the central server 100 keeping the corresponding account register) the proper owners of the external asset C in question. In such a case, the central server 100 may provide a mechanism for allowing the party U in question to, upon request, have new tokens issued. This could, for instance, comprise setting up a revocation scheme whereby a certain balance of coloured blockchain assets A representing said external asset C, corresponding to the lost assets, is transferred from a revoke address to the UTXO addresses in question. Since the coloured blockchain asset A as such (as seen only as a blockchain asset) is preferably worth substantially less money than the external asset C represented by the coloured blockchain asset A in question, such reinstitution will be feasible.

In general, it is preferred that a particular defining amount of the first blockchain asset A corresponds to one unit of the external asset C, and that a transaction spending a certain amount of the first blockchain asset A from the genesis blockchain address involves an even number of said defining amount of the first blockchain asset A. The defining amount may, for instance, be the smallest amount of the blockchain asset A which can validly and/or easily transacted. In the example of the blockchain being the bitcoin blockchain, the defining amount may, for instance, be at the most 1000 satoshis. In the presently described example, a defining amount of 526 satoshis will be used. The defining amount is preferably as low as is practically possible, and in particular may correspond to "dust" of the blockchain currency used.

Hence, the central server 100 may preferably be arranged to provide a transaction spending a certain amount of the first blockchain asset A from the genesis blockchain address involving an even number of said defining amount of the first blockchain asset A.

In one embodiment, the present method further comprises a blockchain asset verification step, comprising the central server 100 verifying that the first blockchain asset A originates from the correct genesis blockchain address. It is then preferred that the combined blockchain transaction is not published on the blockchain unless the verification turns out positive. Preferably, the blockchain asset verification step is performed before the combined transaction is produced.

Such a blockchain asset verification step may also comprise the central server 100 verifying the first and second blockchain assets A in terms of at least blockchain integrity, ownership and amount, and in that the combined blockchain transaction is not published unless the verification in question is positive. The verification of blockchain integrity may comprise verifying that the first and second blockchain assets A constitute validly spendable blockchain UTXOs, in addition to the fact that the first blockchain asset A originates from the said genesis address. An ownership control may comprise verifying that the blockchain asset A in question, in particular the first blockchain asset A, is held by the correct party U.

The blockchain asset verification step may also comprise the verification that the first blockchain asset A has an amount which is an even multiple of any predetermined defining amount (as described above), such as an even multiple of 526 satoshis in the above provided bitcoin example.

The blockchain asset verifications step may also comprise verifying that, for any or each child transaction leg, the transaction leg value in question is not greater than a corresponding parent's value: parent value >= child1 value >= child2 value >= etc.

The method may also comprise an initial step, in which the central server 100 verifies a first asset origin blockchain address of the first party, and thereafter spends the first blockchain asset from the genesis address to the said first asset origin blockchain address. Such in initial step will now be described.

A digital order book is created in and by the central server 100, so that position account holding parties U can freely exchange position account balances, represented by their position account tokens, in atomic swaps of the type discussed herein, using the functionality of the central server 100.

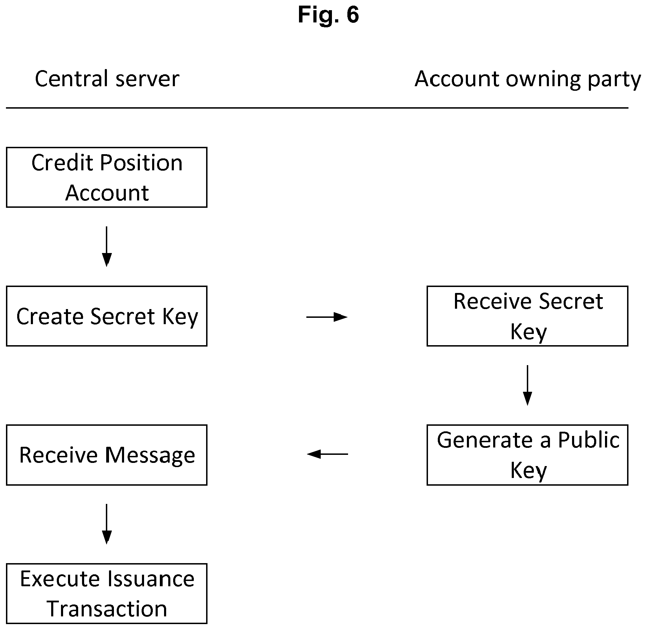

Thereafter, the process continues in a series of instrument issuance steps, according to the following and as illustrated in Figure 6.

The central server 100 credits an account holding party's U position account to reflect their real-world holding of the external asset C (the instrument) in question.

The central server 100 creates a secret cryptographic key, per account holding party U, which is shared with the account holding party U in question. The delivery of the secret key to the party U may take place in any secure way, such as over an encrypted communication channel, via surface mail, etc.

Upon receipt of this secret key, the account holding party may in response thereto generate a certain public cryptographic key, based upon the received secret key and in a way which is conventional as such, for instance using an ECDH (Elliptic Curve Diffie Hellman) calculation step, and to deliver the generated public key, or a blockchain address corresponding to the generated public key, to the central server 100. The receiving of the secret key in question from the central server 100, the generation of said public key and its delivery to the central server 100, may preferably be automatically performed by a client computer of the present type, used by the party U in question, and via the interface 101.

Preferably, the secret key is also delivered back to the central server 100 from the client computer, preferably in the same message as the generated public key. This will enable the central server 100 to verify that the intended client computer was actually the one delivering the generated public key. Such a verification step is preferably performed by the central server 100.

In a preferred embodiment, the client computer may also use an OTP (One Time Password) received from the central server 100 to sign the generated public key, and preferably also the secret key in question; and/or the return message containing the public key and the secret key. This will provide excellent security in the sense that the central server 100 may perform an independent verification that the secret key and the public key are actually received from the intended client computer. It is noted that the verification discussed herein applies equally well to the party U using the client computer, in case the secret key and/or the OTP are delivered to the party U in a secure way and/or in case the party U is required to login securely to the central server 100 and/or the client computer when the latter is used.

Specifically, regarding the mentioned OTP, the method may hence further comprise providing this OTP, from the central server 100 to the party 200 and via surface mail or in any other suitable secure manner, so that the OTP remains secret between the central server 100 and the party U. Then, the party U may perform a mathematical calculation based upon the OTP and the generated public key, or a corresponding blockchain address, such as signing the generated public key. The result of the said calculation is then sent, electronically, such as via the open internet I, from the party U to the central server 100. Preferably, the calculation is of a type making it impossible or practically impossible to calculate the value of the said public key based upon the result of the calculation. Specifically, the calculation preferably comprises the use of a one-way function.

This type of initiation of the instrument in question in relation to the party U in question guarantees that the that the original coloured blockchain asset C balance is credited to a correct account holder.

This initiation part of the method further comprises using the received result to verify that both the OTP and the public key, or a corresponding blockchain address, were used in said calculation. In particular, a validation function of the central server 100 may securely validate and establish which party U with which the sent result, i.e. the OTP proof, is associated. This can be done since the central server 100 has knowledge of the OTP, and also of the generated public key (since the latter is public). Then, the central server 100 may associate the generated public key with the party U in the database 103 for future reference.

Hence, upon receipt of the secret key from the central server 100, the account holding party U generates the said public key with which (or a corresponding blockchain address) they want to receive the position account tokens in question, and the party U thereafter delivers the public key to the central server 100, together with the secret key as described above.

In reaction thereto, the central server 100 then registers, in the database 103, the public key to the account holding party U with which the secret key is associated, and generates a blockchain (issuance) transaction spending a certain amount of UTXOs from the above-discussed genesis address to the account holding party's U blockchain address which is or can be derived from the said generated public key.

As a result, the account holding party U now has position account tokens in her possession, in the form of the UTXOs available from the account holding party's U blockchain address in question. It is noted that only the account holding party U can control these position account tokens.

Thereafter, the initiation is finished, and the OTP is no longer needed.

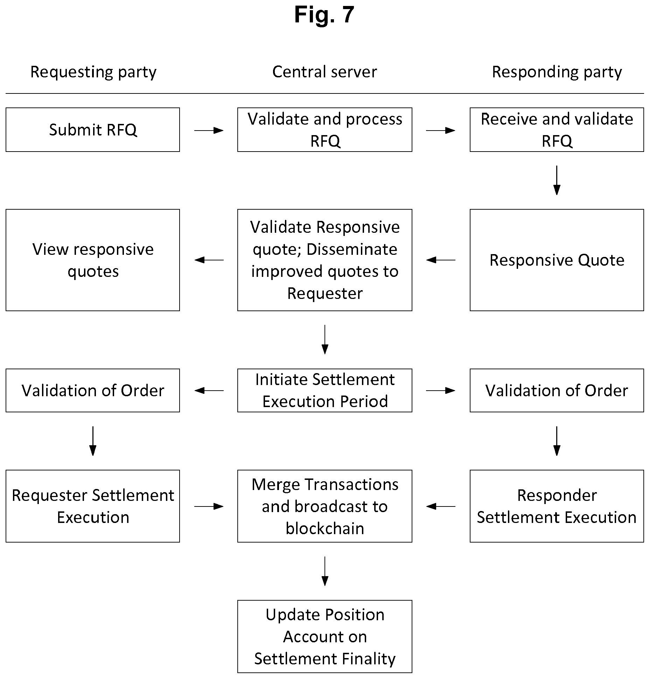

Figure 7 illustrates an example of a method according to the present invention, in which a requesting party U performs a trade in relation to a responding party U, which trade is facilitated and settled using the central server 100.

In a first step, the requesting party U submits an RFQ (Request For Quote) to the central server 100, such as by the use of the above mentioned order book functionality of the central server 100 for the relevant instrument. The RFQ is a request to sell position account tokens (that is, coloured blockchain assets C). Buy orders may work slightly different, as detailed below. The RFQ may be a non-binding solicitation for a quote. The RFQ may include several or all of the following details:
- Instrument ID (identifying to the central server 100 which genesis address to map the corresponding UTXOs to, and to which position account (a party U identifying UserID) to register the trade in question.
- Order type (sale or purchase, in this case sale).
- The amount of position account tokens for sale.
- The UTXOs (coloured assets C) offered for sale (in this case). The UTXOs in question will represent position account tokens on the blockchain which originate from and can be traced back to the genesis address in question. In other words, they now represent the external asset in question.
- A position account token return address. In the event that the sale of the position account tokens are not for the full amount of the UTXOs offered for sale, the extra UTXOs will be returned, in the combined transaction, to the position account token holder.
- The blockchain payment (delivery) address. This is the address to which the position account token seller wishes to receive payment.

Upon receipt by the central server 100 of this order, it may automatically conduct at least the validations/verifications listed below before automatically and digitally disseminating, via interface 101, the order to all other account holders who are logged into the central server 100 function:
- That the coloured blockchain asset C UTXOs identified in the RFQ originate from the relevant genesis address.
- That the position account has a balance large enough to support the sale.

Alternatively, such validation/verification may be performed later, after both signed transaction parts have been received but before the combined transaction is published.

In a next step, the responding account holding party U may validate that the UTXOs offered for sale in the disseminated RFQ originates from the relevant genesis address.

Then, the responding party U may respond to the central server 100 with a message containing several or all of the following information:
- A responding party U user identity.
- A price per position account token (or per external asset C represented by such tokens) offered for sale.
- The (coloured or non-coloured blockchain) UTXOs associated with the offered payment amount.
- A blockchain return address. In the event that the sale of coloured blockchain assets C are not for the full amount of the UTXOs offered as payment, the extra UTXOs will need to be returned to the payment blockchain asset holder, in other words the responding party U.
- A position account token delivery address, with which to receive the coloured blockchain asset C UTXOs representing the bought instrument.

The purchaser of the position account token (in this case, the responding party U) is preferably required to pay the full blockchain network fee for the entire combined transaction, and will need to calculate this on their own and include this UTXO information in the transaction, as the case may be and depending on the type of blockchain used for the transaction.

Typically, blockchain asset transaction fees are calculated based on the size of the transaction in bytes, not the value of the transaction itself. Moreover, transaction fees typically affect the processing priority, meaning that transactions with a higher fee per byte is more likely to be selected by a miner to be included in a block should the mempool have more transaction queued that available blockspace in the next block.

According to one embodiment of the present invention, the data structure used for communicating transaction information to and from the central server 100 needs not have a specific field for a transaction fee, since transaction fees are implied as the difference between the sum of inputs and the sum of outputs in the combined transaction.

Hence, the buying party U of the coloured blockchain asset A is preferably charged with paying the transaction fee for the entire combined transaction, even including the inputs of the selling party U, as the selling party U will not be expected to have a balance other than the coloured blockchain assets A in question, whereas the buying party U will provide enough inputs to ensure that the combined transaction will be mined (within a certain number of blocks).

Upon the receipt of such a response from the responding party U, the central server 100 then automatically validates the responsive quote, to see if it is an improvement over the current best quote, as compared to orders that have previously been received from other responding parties U to the same RFQ. If yes, it proceeds to validate the respondent part of the transaction by verifying that the blockchain asset UTXO offered as payment exists on the blockchain in question and corresponds to the correct amount, as well as that the responding party U has a valid position account of the above described type.

This validation may also take place later, however at the latest before the publication of the combined transaction.

The central server 100 then disseminate the best price and other relevant information regarding the transaction, such as responding party U and offered payment blockchain assets A, to the requesting party U. This dissemination may be performed in real-time, as the information arrives at the central server 100 from responding parties U.

At the conclusion of a responsive (RFQ) time period of predetermined length, the central server 100 thereafter initiates a settlement execution time period, which may also be of predetermined length.

In particular, the step in which the central server 100 electronically receives the signed first and second blockchain transaction parts may be performed during such a settlement execution time period of predetermined length, which settlement execution time period is initiated by the central server 100 once the first party U and the second party U, as well as a first asset transaction amount and a second asset transaction amount, have been identified by the central server 100.

Hence, from the point of view of the central server 100, the method of the present invention may comprise a first RFQ phase, performed during a first time period of predetermined length, followed by a second settlement phase, performed during a second time period of predetermined length. The settlement phase may only be performed in case a matching pair of transaction parties U have been identified as willing to trade at a particular price.

In the event that the initial RFQ was for a purchase of position account tokens, the initial RFQ would not have contained any information regarding blockchain balance UTXOs, as there is no way of knowing at what level the responsive quotes came back so that one could know how much payment was required. For those transactions, the requesting party U will need to supply this information at the end of the responsive period. The central server 100 will then share this information with the requesting party U in connection to the initiation of the said settlement initiation time period.

At this point, both the requesting party U and the responding party U will have all the details required to create a combined transaction of the type discussed herein, which in the presently discussed exemplifying embodiment is a coin-join transaction, and in particular to produce the respective first and second blockchain transaction parts as described above. Such a coin-join transaction is a type of transaction where two parties U have agreed to form a single transaction where the respective and assigned UTXOs that go into the transaction compromise a respective blockchain asset and one or several position account tokens of the type discussed above. The requesting party U and the responding party U can only sign the transaction for the UTXOs they themselves control. The requesting party U and the responding party U each individually sign the UTXOs they control, after validating the entire construct again, and deliver the signed halves (transaction parts) to the central server 100 (which halves preferably also comprises information regarding legs not controlled by the signing party U in question).

Hence, the parties U each sign their respective transaction parts individually, and then submit their signed halves to the central server 100, which central server 100 then merges and broadcasts the combined transaction. If instead one party U would have received a half signed transaction (a signed transaction part) from a counterparty U, such a receiving party U could push the transaction to the network (publish it to the blockchain) whenever they want. According to the present invention, the central server 100 instead sets said settlement time-period during which the parties U have a fixed window to deliver the signed halves. Once both parties U have delivered their respective signed transaction parts, the central server 100 will publish the combined transaction on the network.

As mentioned above, the combined transaction is preferably atomic. This is, for instance, the case for bitcoin coin-join transactions. in such case, the combined transaction is either performed in full or not at all, providing full counterparty risk mitigation.

At the latest at the end of the settlement period, if the required information including the signed transaction parts has been received by the central server 100 from both parties U, the central server 100 validates the transaction one last time, at least with respect to that the UTXO(s) representing the position account balance exist and are valid; and that the UTXO(s) offered as payment correspond to the value offered. Thereafter the central server 100 publishes the merged combined transaction on the blockchain in question.

In case the blockchain is the bitcoin blockchain, the central server 100 may then wait six blockchain confirmations (mining depth of six), before determining that the transaction has been settled with finality. In the case of other blockchains, other confirmation depths may be used. Thereafter, it transfers the position account balance from the selling party U account to the buying party U account.

In the above example, the initial RFQ was described as a sell order. In the opposite case, when the initial RFQ is a buy order, the requesting party U will not know in advance the price of an incoming responsive quote, and hence there is no way for the requesting party U to include the UTXO information of what they offer as payment in terms of the payment blockchain asset A. Therefore, when the RFQ is for a buy, the requesting party U, upon receipt of the responsive quote, will at that point need to collect and submit the UTXOs for the central server 100 to share with the responder for them to be able to create their half of the transaction. In short, in case of buy, it's the requester who pays any transaction fees, and the transaction itself is created at settlement stage on requester's side (when selling it's created when sending RFQ).

The invention further relates to the computer server (central server) 100 described herein, which central server 100 is arranged for settling an asset transaction of the present type.

As described above, the central server 100 is arranged to electronically receive, from the first and second parties U, said signed first and second blockchain transaction parts, to combine the first and second blockchain transaction parts in said single combined blockchain transaction comprising the first input blockchain transaction leg, the second input blockchain transaction leg, the first output blockchain transaction leg concerning the first blockchain asset and the second output blockchain transaction leg concerning the second blockchain asset, and then to publish the produced combined blockchain transaction on the blockchain ledger L in question.

As described above, the central server 100 is furthermore arranged with the digital interface 101, using which the external parties U can participate in said bidding, quotation or request for quote process, during or as a result of which the first party U is provided with the said information regarding the second blockchain asset A making it possible for the first party U to verify the blockchain integrity of the second blockchain asset A, and during or as a result of which the second party U is provided with the said information regarding the first blockchain asset A making it possible for the second party U to verify the blockchain integrity of the first blockchain asset A. in particular, information regarding input and output legs not controlled by a particular party U, necessary to construct the transaction part in question, may be received from the counterparty, via the central server 100 and specifically using said digital interface 101. All such information provision preferably takes place over said digital interface, which may preferably be encrypted.

Furthermore, the invention relates to a client computer of the above discussed type, used by the party U for performing an asset transaction of the present type on behalf of the party U. In orderto perform the transaction, the client computer may communicate automatically and digitally with the central server 100, via said digital interface 101. In general, the client computer is preferably arranged to provide all functionality described herein on behalf of the respective party U, as applicable.

The client computer is preferably arranged to keep all relevant asset information for the party U using the client computer, and preferably comprises a secure login function for the party U in question. During use in the present method for participating in a transaction of the present type, the party U in question is preferably securely logged into the client computer. The client computer may then preferably comprise a blockchain asset wallet, or similar, being arranged to produce, communicate and validate blockchain transaction parts of the types described herein, and to validate combined transactions published to the ledger L by the central server 100. The client computer may be arranged to provide a party U interface, such as a digital user interface, preferably a graphical user interface on for instance a screen display of the client computer, arranged to provide to the using party U a live updated view of the party's current blockchain asset A holdings, current external assets C holdings, current prices of the external assets C and/or other market data such as trading activity. Preferably, the client computer is arranged to automatically translate coloured blockchain asset A holdings into corresponding external asset holdings C, using the same defining amount as the central server 100 (see above). For instance, a holding of 526 coloured bitcoin satoshis may be automatically translated by the client computer into 1 stock share of a particular company, which latter information is presented to the using party U.

In particular, in case the first and/or second traded asset is a respective asset registered as an association with the first or second blockchain asset A, respectively, on the ledger L in question, it is preferred that the said digital party interface is arranged to allow the using party U to place orders, quotes and/or requests for quotes in terms of the first and/or second asset, as discussed above.

The client computer may specifically be arranged to receive, from the central server 100 and via interface 101, information regarding a counterparty U offering, such as an RFQ or RFQ response (including information regarding non-controlled legs as described above), to present such information to the party U using the client computer for review, and, in case the said using party U approves of the information in question, allow the using party U to automatically initiate the automatic construction and signing of the corresponding transaction part as described above, after which the client computer is arranged to automatically communicate the signed transaction part in question back to the central server 100 for processing.

It is noted that the client computer preferably is arranged to provide functionality for the using party U to act both as a buyer and a seller of external assets. In the above discussed example, this may involve both allowing the party U to place and to respond to RFQs. Hence, for the client computer at least one of the first and second assets is registered as an association (colouring) of the present type.

Hence, such a client computer is arranged to receive and verify, on the blockchain ledger L in question, information received from the central sever 100 regarding the second blockchain transaction part, comprising the second input blockchain transaction leg concerning the second blockchain asset A in question; to construct and sign the first blockchain transaction part, comprising a first input blockchain transaction leg concerning the first blockchain asset A in question; to provide the signed first blockchain transaction part to the central server 100; to receive information regarding the single combined blockchain transaction from the central server 100; to verify, on the ledger L, that the combined blockchain transaction comprises, as input blockchain transaction legs, the first and second blockchain transaction legs, and that the combined blockchain transaction comprises, as an output transaction leg, a blockchain transaction part transferring the second blockchain asset to the blockchain destination address specified by the client computer to the central server 100 before the generation of said combined transaction. This verification may also cover any output return address legs used, as described above.

In the case of a buying party U, the corresponding applies.

Preferably, the client computer is further arranged to verify that at least one of the first and second input blockchain transaction legs is allocated to or corresponds to the predetermined and identifiable input leg of the combined blockchain transaction, as described above.

In the above discussed case in which the second traded asset is an asset registered as an association with a specific second blockchain asset A on the said ledger L, the client computer may further be arranged to verify that a previous combined blockchain transaction involving the second blockchain asset A in question comprised an output blockchain transaction leg involving the second blockchain asset A in question, and that this output blockchain transaction leg was indeed allocated to or corresponding to a predetermined and identifiable input leg of the previous combined blockchain transaction in question. In particular, the client computer may be arranged to verify that a backwards trace of the blockchain asset A leads, in its entirety, back to the correct genesis address, and that it has never been transferred in a transaction which is not a combined transaction of the present type produced by the central server 100.

It is noted that the client computer may further be arranged to automatically provide, to the central server 100 and via interface 101, the said blockchain destination address and/or the first blockchain asset return address, for instance based upon a digital blockchain wallet kept by the client computer.

Furthermore, the present invention relates to a trading system, comprising both a central server 100 of the present type and at least two, preferably a plurality of, client computers of the present type. Such a system is then arranged to allow parties U to trade said first and second assets A between them, using a respective one of said client computers each, and in particular to trade one or several external assets C, carried by coloured blockchain assets in the way described herein.

The present invention also relates to a server computer software product for settling an asset transaction of the present type. Such a computer software product is in general arranged to be executed on or from the central server 100, and there automatically perform all the functionality and method steps performed by the central server 100 as described herein.

Similarly, the present invention relates to a client computer software product for performing an asset transaction of the present type. Such a client computer software product is arranged to be executed on or from a client computer of the present type, and there automatically perform all the functionality and method steps performed by the client computer as described herein.

Above, preferred embodiments have been described. However, it is apparent to the skilled person that many modifications can be made to the disclosed embodiments without departing from the basic idea of the invention.

For instance, the present invention has been described as a method and a system for performing a transaction between one buyer and one seller, each providing a respective input blockchain asset transaction leg concerning at least one coloured blockchain asset representing an external asset.

However, it is envisioned that a combined transaction of the present type can comprise more than two input blockchain asset transaction legs.

In one such example, a buying and/or selling party may provide the first and/or second input blockchain asset as two or more input transaction legs. For instance, the coloured blockchain asset may comprise several coloured UTXOs together amounting to, or exceeding, the traded amount; or several UTXOs may be presented as payment for the external asset, together amounting to or exceeding the payment amount.

Herein, the central server has been described as an entity both producing and providing combined transactions of the present type, and also holding position accounts for users. It is, however, foreseeable that such a central server only produces and provides the combined transactions, while position accounts may be held by an external repository or similar.

Even though bitcoin is a preferred blockchain ledger for the present purposes, it is realized that any similar blockchain based currency would be useful.

Furthermore, other price discovery algorithms than the RFQ-based one described herein are also envisioned.

In general, everything which has been said herein regarding the method of the present invention is equally applicable to the described central server and/or client computer, as the case may be, and vice versa. The corresponding is also true regarding the server computer software product and the client computer software product in relation to the method, the central server and the client computer.

Hence, the invention is not limited to the described embodiments, but can be varied within the scope of the enclosed claims.

## Claims

1. Method for settling an asset transaction in which a first asset is exchanged for a second asset,
which first asset is registered as an association with a specific first blockchain asset (A) on a blockchain-based ledger (L),
which ledger (L) is arranged to keep track of blockchain transactions concerning the blockchain asset (A) in question from senders to specified blockchain asset addresses, which blockchain transactions are signed using a respective private cryptographic key belonging to the sender in question,
which association is arranged so that the association remains as an association between the first asset and a blockchain asset (A), in a way which is verifiable on the said ledger (L), after a transaction involving the blockchain asset (A) in question,
which second asset is either a second blockchain asset (A) on the ledger (L) in question or an asset registered as an association with a specific second blockchain asset (A) on the said ledger (L),
**characterised in that** the method comprises the steps
a) a selling first party (U) providing and signing a first blockchain transaction part comprising a first input blockchain transaction leg concerning the first blockchain asset (A) in question and a buying second party (U) providing and signing a second blockchain transaction part comprising a second input blockchain transaction leg concerning the second blockchain asset (A) in question;
b) a central server (100) electronically receiving the signed first and second blockchain transaction parts;
c) the central server (100) combining the first and second blockchain transaction parts in a single combined blockchain transaction comprising the first input blockchain transaction leg, the second input blockchain transaction leg, a first output blockchain transaction leg concerning the first blockchain asset and a second output blockchain transaction leg concerning the second blockchain asset; and
d) the central server (100) publishing the combined blockchain transaction on the blockchain ledger (L).

2. Method according to any one of the preceding claims, **characterised in that** the first party (U) is not provided with the signed second blockchain transaction part, and the second party (U) is not provided with the signed first blockchain transaction part, before step d.

3. Method according to any one of the preceding claims, **characterised in that** the first output blockchain transaction leg is addressed to a first destination blockchain address, provided to the first party (U) before the signing in step a) and preferably provided by the second party (U), and **in that** the second output blockchain transaction leg is addressed to a second destination blockchain address, provided to the second party (U) before the signing in step a) and preferably provided by the first party (U).

4. Method according to claim 3, **characterised in that** the second party (U) is provided, before the signing in step a), with a first blockchain asset return address, **in that** the first party (U) is provided, before the signing in step a), with a second blockchain asset return address, **in that** any remaining first and second blockchain asset (A) amount, respectively, is allocated in the combined transaction to said respective return address after a determined first and second blockchain amount, respectively, has been allocated in the combined transaction to the said first and second destination blockchain address, respectively.

5. Method according to claim 4, **characterised in that** any blockchain currency transaction cost for the combined blockchain transaction is deducted in its entirety from the second blockchain asset (A) amount before the second blockchain amount is allocated in the combined transaction to the said second return address.

6. Method according to any one of the preceding claims, **characterised in that** the first blockchain asset (A) is a blockchain asset which has previously been spent from a genesis blockchain address from which all blockchain assets being associated with the said first asset (A) for the purposes of this method have been previously spent, which genesis blockchain address is associated with a genesis public cryptographic key in turn being associated with a genesis private cryptographic key privately held by the central server (100).

7. Method according to claim 6, **characterised in that** a particular defining amount of the first blockchain asset (A) corresponds to one unit of the first asset, and **in that** a transaction spending a certain amount of the first blockchain asset (A) from the genesis blockchain address involves an even number of said defining amount of the first blockchain asset (A).

8. Method according to claim 6 or 7, **characterised in that** the method comprises a blockchain asset (A) verification step, comprising the central server (100) verifying that the first blockchain asset (A) originates from the genesis blockchain address, and **in that** the combined blockchain transaction is not published unless this is found to be the case.

9. Method according to any one of claims 6-8, **characterised in that** the method comprises an initial step in which the central server (100) verifies a first blockchain asset (A) origin blockchain address of the first party (U) and thereafter spends the first blockchain asset (A) from the genesis address to the said first blockchain asset (A) origin blockchain address.

10. Method according to any one of the preceding claims, **characterised in that** the first input blockchain transaction leg is allocated to a predetermined and identifiable input leg of the combined blockchain transaction.

11. Computer server for settling an asset transaction in which a first asset is exchanged for a second asset,
which first asset is registered as an association with a specific first blockchain asset (A) on a blockchain-based ledger (L),
which ledger (L) is arranged to keep track of blockchain transactions concerning the blockchain asset (A) in question from senders to specified blockchain asset addresses, which blockchain transactions are signed using a respective private cryptographic key belonging to the sender in question,
which association is arranged so that the association remains as an association between the first asset and a blockchain asset (A), in a way which is verifiable on the said ledger (L), after a transaction involving the blockchain asset (A) in question,
which second asset is either a second blockchain asset (A) on the ledger (L) in question or an asset registered as an association with a specific second blockchain asset (A) on the said ledger (L),
**characterised in that** the computer server is arranged to
electronically receive, from a selling first party (U), a signed first blockchain transaction part comprising a first input blockchain transaction leg concerning the first blockchain asset (A) in question; and receive, from a buying second party (U), a signed second blockchain transaction part comprising a second input blockchain transaction leg concerning the second blockchain asset (A) in question;
combine the first and second blockchain transaction parts in a single combined blockchain transaction comprising the first input blockchain transaction leg, the second input blockchain transaction leg, a first output blockchain transaction leg concerning the first blockchain asset and a second output blockchain transaction leg concerning the second blockchain asset; and
publish the combined blockchain transaction on the blockchain ledger (L).

12. Client computer for performing an asset transaction in which a first asset is exchanged for a second asset,
which first asset is either a first blockchain asset (A) registered on a blockchain-based ledger (L) or an asset registered as an association with a specific first blockchain asset (A) on the ledger (L) in question,
which second asset is either a second blockchain asset (A) on the ledger (L) in question or an asset registered as an association with a specific second blockchain asset (A) on the said ledger (L),
which ledger (L) is arranged to keep track of blockchain transactions concerning the blockchain asset (A) in question from senders to specified blockchain asset (A) addresses, which blockchain transactions are signed using a respective private cryptographic key belonging to the sender in question,
wherein at least one of the first and second assets is registered as such an association, which association is arranged so that the association remains as an association between the first asset and a blockchain asset (A), in a way which is verifiable on the said ledger (L), after a transaction involving the blockchain asset (A) in question,
**characterised in that** the client computer is arranged
to receive and verify, on the ledger (L), information regarding a second blockchain transaction part comprising a second input blockchain transaction leg concerning the second blockchain asset (A) in question;
to identify and sign a first blockchain transaction part comprising a first input blockchain transaction leg concerning the first blockchain asset (A) in question;
to provide the signed first blockchain transaction part to a central server (100);
to receive information regarding a single combined blockchain transaction from the central server (100);
to verify, on the ledger (L), that the combined blockchain transaction comprises, as input blockchain transaction legs, the first and second input blockchain transaction legs, and that the combined blockchain transaction comprises, as an output transaction legs, a blockchain transaction leg transferring the second blockchain asset (A) to a specified second blockchain destination address.

13. System comprising a computer server according to claim 11 and at least two client computers according to claim 12, which system is arranged to allow parties to trade said first and second assets using a respective one of said client computers each.

14. Computer software product for settling an asset transaction in which a first asset is exchanged for a second asset,
which first asset is registered as an association with a specific first blockchain asset (A) on a blockchain-based ledger (L),
which ledger (L) is arranged to keep track of blockchain transactions concerning the blockchain asset (A) in question from senders to specified blockchain asset addresses, which blockchain transactions are signed using a respective private cryptographic key belonging to the sender in question,
which association is arranged so that the association remains as an association between the first asset and a blockchain asset (A), in a way which is verifiable on the said ledger (L), after a transaction involving the blockchain asset (A) in question,
which second asset is either a second blockchain asset (A) on the ledger (L) in question or an asset registered as an association with a specific second blockchain asset (A) on the said ledger (L),
**characterised in that** the computer software product, when executed on a computer server, is arranged to
allow the computer server to electronically receive, from a selling first party (U), a signed first blockchain transaction part comprising a first input blockchain transaction leg concerning the first blockchain asset (A) in question; and to receive, from a buying second party (U), a signed second blockchain transaction part comprising a second input blockchain transaction leg concerning the second blockchain asset (A) in question;
combine the first and second blockchain transaction parts in a single combined blockchain transaction comprising the first input blockchain transaction leg, the second input blockchain transaction leg, a first output blockchain transaction leg concerning the first blockchain asset and a second output blockchain transaction leg concerning the second blockchain asset; and
publish the combined blockchain transaction on the blockchain ledger (L).

15. Computer software product for performing an asset transaction in which a first asset is exchanged for a second asset,
which first asset is either a first blockchain asset (A) registered on a blockchain-based ledger (L) or an asset registered as an association with a specific first blockchain asset (A) on the ledger (L) in question,
which second asset is either a second blockchain asset (A) on the ledger (L) in question or an asset registered as an association with a specific second blockchain asset (A) on the said ledger (L),
which ledger (L) is arranged to keep track of blockchain transactions concerning the blockchain asset (A) in question from senders to specified blockchain asset addresses, which blockchain transactions are signed using a respective private cryptographic key belonging to the sender in question,
wherein at least one of the first and second assets is registered as such an association, which association is arranged so that the association remains as an association between the first asset and a blockchain asset (A), in a way which is verifiable on the said ledger (L), after a transaction involving the blockchain asset (A) in question,
**characterised in that** the computer software product, when executed on a client computer, is arranged to
allow the client computer to receive, and to verify, on the ledger (L), information regarding a second blockchain transaction part comprising a second input blockchain transaction leg concerning the second blockchain asset (A) in question;
identify and sign a first blockchain transaction part comprising a first input blockchain transaction leg concerning the first blockchain asset (A) in question;
provide the signed first blockchain transaction part to a central server (100);
allow the client computer to receive information regarding a single combined blockchain transaction from the central server (100);
verify, on the ledger (L), that the combined blockchain transaction comprises, as input blockchain transaction legs, the first and second input blockchain transaction legs, and that the combined blockchain transaction comprises, as an output transaction leg, an output blockchain transaction leg transferring the second blockchain asset (A) to a specified blockchain destination address.
